# EUROPEAN PATENT SPECIFICATION

(11) **EP 0 458 128 B1**
(45) Date of publication and mention of the grant of the patent: **01.02.1995**
(21) Application number: 91107427.6
(22) Date of filing: 07.05.1991
(51) Int. Cl.: F16G 1/08, F16G 1/28

(54) **Fiber-reinforced rubber**
Faserverstärkter Gummi
Caoutchouc renforcé de fibres

(30) Priority: 15.05.1990 JP 126336/90
(43) Date of publication of application: 27.11.1991
(73) Proprietor: BANDO CHEMICAL INDUSTRIES, LIMITED, Hyogo-ku Kobe-shi (JP)
(72) Inventor: Nakanishi, Yasuyuki, c/o Bando Chemical Ind., Kobe-shi (JP); Matsuoka, Hiroshi, c/o Bando Chemical Ind., Kobe-shi (JP)
(74) Representative: Gauger, Hans-Peter, Dipl.-Ing.

(56) References cited:
- EP-A- 0 199 546
- US-A- 1 400 301
- US-A- 1 442 924
- US-A- 2 257 649
- US-A- 3 584 516
- US-A- 4 681 558
- KAUTSCHUK UND GUMMI-KUNSTSTOFFE, vol. 36, no. 10, October 1983, pages 870-874,Heidelberg, DE; P. PULVERMACHER et al.: "Hochfeste Fasern in der Kautschukindustrie"
- PATENT ABSTRACTS OF JAPAN, vol. 8, no. 112 (M-298)[1549], 25th May 1984;& JP-A-59 19 744 (MITSUBOSHI BELT) 01-02-1984 (Cat. D)
- PATENT ABSTRACTS OF JAPAN, vol. 5, no. 183 (M-97)[855], 21st November 1981;& JP-A-56 103 008 (BANDOO KAGAKU) 17-08-1981 (Cat. D)

## Description

The present invention relates to a fiber-reinforced rubber and more particularly to a reinforcement embedded in a rubber of the kind as described in US-A-4,681,558.

Since high Plessley tensile strength, high elasticity, high dimensional stability, and high adhesive strength has been required for rubbers such as a belt, a tire, and a hose, a reinforcing cord constructed by fibers or a reinforcing canvas is embedded in a rubber. Generally, cords of twisted yarns are used for the reinforcement. The cords are grouped into all-yarns-twisted cords, half-yarns-twisted cords, or lang lay. The all-yarns-twisted cords are most popular as a reinforcement for a rubber.

However, when the all-yarns-twisted cords are embedded in a rubber as a reinforcement, monofilaments rub each other at a sharp angle within the all-yarns-twisted cord. Accordingly, the yarn is abraded, broken, or decreased in strength from that rubbed part after short period of usage. Therefore, the flex fatigue is lowered.

Japanese Patent Application Laying Open Gazette No.59-19744 discloses a fiber-reinforced rubber, wherein the reinforcement is consisted of half-yarns-twisted cords or lang lay to solve the above problem (flex fatigue).

However, a rubber reinforced by half-yarns-twisted cords or lang lay is lowered in elongation and rate of tensile elasticity after dipping process, comparing with a rubber reinforced by all-yarns-twisted cords. This results in lower dimensional stability.

Also, since the half-yarns-twisted cords or lang lay are twisted in only one direction, inversion and loose of cords are easily caused at an end. This makes the processing of the cord harder. Furthermore, fray is easily caused in a place where the cord is cut during processing of the cord.

When the half-yarns-twisted cords or lang lay are used as a reinforcement for an industrial belt, there exists the problem that only one side of the belt is abraded soon since the running belt inclines to one side. This inclination is caused by the twisted direction of the cords such as a half-yarns-twisted cord. Japanese Patent Application Laying Open Gazette No. 56-103008 discloses a conveyor belt, in which a reinforcement is consisted of half-yarns-twisted cords of S-twist and half-yarns-twisted cords of Z-twist alternately in order to prevent an uneven abrasion. However, in this case, two kinds of cords (both are half-yarns-twisted cords) are set in parallel and spiral in a belt and totally four places are cut in every pair of two cords on right and left sides of the belt. Therefore, the maintainability of plessley is lowered.

On the other hand, a braided cord such as described in US-A-4,681,558 and being comprised of a metallic reinforcing member such as a cable discontinuous in length and a plurality of non-metallic carrier members braided about the same has been used for various purposes. A cylindrically braided cord of braided members is superior in flex fatigue due to its constructional characteristics. It is also superior to a twisted cord in dimensional stability. Therefore, a cylindrically braided cord will improve both the flex fatigue and dimensional stability if it is used as a reinforcement for a rubber. A cylindrically braided cord is superior in the processing since no loose by an inversion at an end of the cord, such as half-yarns-twisted cords or lang lay, is caused. Therefore, cut end is not frayed at processing. Furthermore since cylindrically braided cords don't possess the twisted direction like half-yarns-twisted cords, the industrial belt maintains stable running without inclination and consequently, uneven abrasion can be prevented.

However, a cylindrically braided cord may possess a relatively large inner hollow. The size of the hollow depends on the number of members used for forming the cord. In case that a large hollow is formed, the cord becomes flat when it stretches. Thus, the dimensional stability still doesn't satisfy the requirement, even it is better than the twisted cord.

The object of the present invention is to use a cylindrically braided cord instead of a twisted cord for a reinforcement, and specify a number of yarns to use so as to provide a rubber with high flex fatigue, dimensional stability, and longer service life.

According to the present invention, the reinforcement embedded in a rubber is constructed by a cylindrically braided cord comprising yarns, of inorganic, organic or metallic fibers with an even number of the yarns in a range of four up to eight and forming no or only a small inner hollow.

Fig.1 is an enlarged vertical side section of a cylindrically braided cord.

Fig.2 is an enlarged vertical front view of a cylindrically braided cord.

Fig.3 is an enlarged vertical front section of a synchronous belt.

Fig.4 is an explanatory drawing of the testing system for a flex fatigue.

Preferred embodiment will be described below with reference to accompanying drawings.

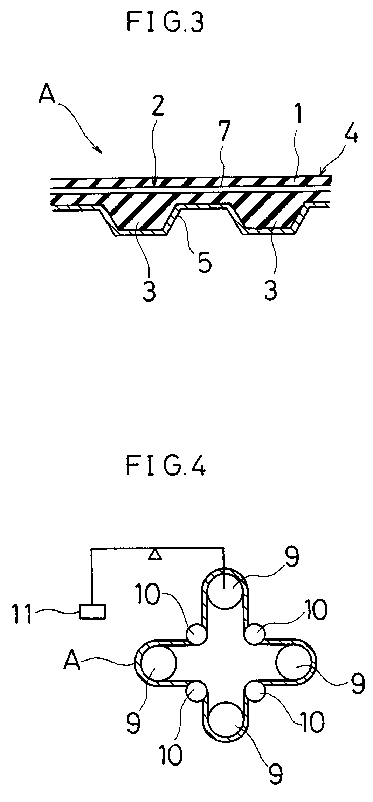

Fig.3 illustrates a synchronous belt A which is comprised of a fiber-reinforced rubber. The synchronous belt A comprises a belt base 4 having a stretching rubber layer 1 and a plurality of teeth 3 formed on one side thereof (only two teeth are shown in lower side of the belt in Fig. 3). The plurality of teeth 3 are made of the same material, a rubber, as the stretching rubber layer 1. A fiber reinforcement 2 is embedded in the stretching rubber layer 1 of the belt base 4. A canvas layer 5 is adhered to the surface of the teeth 3 of the belt base 4.

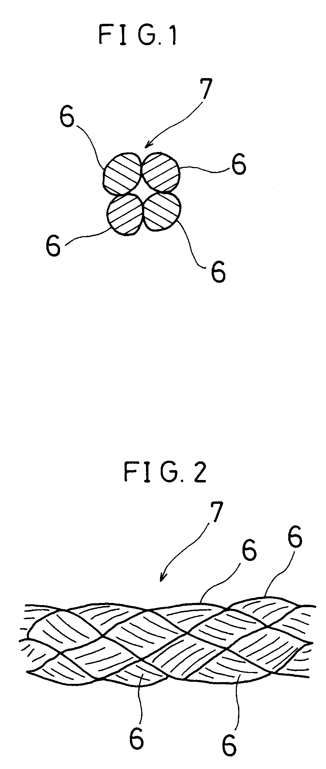

The reinforcement 2, as enlargely shown in Figs.1 and 2, is constructed by cylindrically braided cords 7 braided by yarns 6, where the number of yarns is an even number in the range of four up to eight (four yarns in the present embodiment).

The yarns 6 may be an inorganic fiber, an organic fiber, or a metallic fiber. Further, a short or long fiber spun yarn or combination of those can be used for the yarns 6 according to the required performance of the synchronous belt A. Also, the number of yarns 6 can be any even numbers if it is in the range of four up to eight. In order to make a cord of cylindrical configuration, yarns of an even number and no less than four yarns are required. That's because an industrial braiding machine cannot make a cord of a cylindrical configuration by using yarns of an odd number when yarns of the same denier number are used. The reason to set the upper limit for the number of yarns, which is eight, is to gain no hollow inside of the cord or gain a small hollow if it exists. If more than eight yarns are used for a cord, a relatively large hollow is formed and the dimensional stability becomes worse by flattening of the hollow when the cord is stretched. Also, the total denier number and the number of monofilament vary according to the required performance of the synchronous belt A.

The cylindrically braided cord 7 undergoes an adhesive process in which the cord is soaked into adhesive combined with epoxy resin, isocyanate compound, ethylene urea compound, and resorcin formalin latex (RFL), etc. and a stretching process before it is embedded in the stretching rubber layer 1. Dipping process is preferable for the adhesive process in order to soak adhesive evenly from surface to inside of it.

The result of a flex fatigue test is shown in Table 1, comparing the above constructed synchronous belt A with a comparable example. The numerals of Table 1 show a maintainability of Plessley tensile strength of a cylindrically braided cord.

### 〈Construction of Synchronous Belt A of Present Embodiment I〉

Four 1600de (400de×4 and the number of total denier is 6400de) Kevlar (product of Du Pont) are used for cylindrically braided cords 7 constructing a reinforcement 2. The cylindrically braided cord 7 is dipped into the isocyanate compound so as to form a sub-coat ply, then it is dipped into the adhesive combination liquid of resorcin formal in latex (RFL) so as to form a second-coat ply, further it is dipped into chloroprene rubber so as to form a top-coat ply, and finally it is processed with a stretching process with 1g/de tension. The synchronous belt A, wherein the reinforcement 2 comprises a plurality of cylindrically braided cords 7 as embedded in the belt base 4, is obtained by the following steps: a plurality of cylindrically braided cords 7 finished with the stretching process is put spirally on the stretching rubber layer 1 of the chloroprene rubber, and the teeth 3 of the chloroprene rubber are formed on it so that the cylindrically braided cord 7 is embedded therein. Thereafter, the nylon cloth 5 is adhered to the surface of teeth 3 and the rubber is cured. The adhesive is soaked evenly from the surface to the inside of the cylindrically braided cord 7 during the adhesive process.

### 〈Construction of Synchronous Belt A of Present Embodiment II〉

Eight 800de (400×2 and the number of total denier is 6400de) Kevlar (product of Din Pont) are used for cylindrically braided cords 7 constructing a reinforcement 2. Other features are the same as the belt of the present embodiment I.

### 〈Construction of Synchronous Belt of Comparable Example〉

Sixteen 400de (400×1 and the number of total denier is 6400de) Kevlar (product of Du Pont) are used for a cylindrically braided cord 7 constructing a reinforcement 2. Other features are the same as the belt of the present embodiment I.

### 〈Test on Flex Fatigue〉

The test was carried out by the system shown in Fig.4, where the synchronous belt A is wound round four large pulleys 9 and four small pulleys 10 interposed between large pulleys 9, and a predetermined tension is applied to the synchronous belt A by a weight 11. The synchronous belt A is run, and the maintainability of plessley is measured. The small pulleys 10 are 30mm in diameter. One cycle refers to that the synchronous belt A goes through all the four small pulleys 10, i.e., four belt flex.

**TABLE 1**

| | Belt Flex Number | |
|---|---|---|
| | 1X10⁷ | 1X10⁸ |
| Present Embodiment I | 72.0% | 68.3% |
| Present Embodiment II | 69.2% | 63.9% |
| Comparable Example | 49.1% | 47.0% |

As shown in the test data on table 1, at both 1×10⁸ and 1×10⁷ belt flex number, the maintainability of plessley of the present embodiments I and II is more than 60%. However, the maintainability of Plessley tensile strength of the comparable example is less than 50%. This shows that the present embodiments I and II are superior to the comparable example in the pulling adhesive strength. This results from that the flattening of the hollow is hardly caused when the cord is stretched because no hollow or a very small hollow if it exists is formed in the cylindlically braided cord 7 in the present embodiments I and II. On the other hand, in the comparable example, a relatively large hollow is formed in the cylindrically braided cord 7. Therefore, the flattening of the hollow is easily caused when the cord is stretched.

In the present embodiments, since the reinforcement 2 embedded in the belt base 4 is constructed by the cylindrically braided cords 7 which are braided by yarns 6, where the number of yarns is an even number in the range of four up to eight, the even stress is applied to the monofilaments, which construct yarns 6, as the constructional characteristic of the cylindrically braided cord 7. Accordingly, flex fatigue can be improved greatly. Also, the dimensional stability of the synchronous belt A can be improved by restricting flattening of the cords when the cords are stretched. The flattening of the cords is restricted by specifying the number of yarns to make no hollow or a very small hollow if it exists. Thus, the service life of the synchronous belt A becomes longer.

In the above embodiment, if the center cord is provided in a hollow of the cylindrically braided cord 7, the dimensional stability, in addition to the flex fatigue, will be improved.

Moreover, in the present embodiment, the synchronous belt A is shown as a rubber. However, the belt is not limited to the synchronous belt A, but covers an industrial belt such as a conveyor belt and a transmission belt like a flat belt and a ribbed belt. The present invention also can be applied to rubbers other than belts, for example, tires and hoses.

## Claims

1. A fiber-reinforced rubber (1, 3) having a fiber reinforcement (2) of cylindrically braided cords (7) which are embedded therein,
characterized in that said cylindrically braided cords (7) are each comprised of braided yarns (6) of inorganic, organic or metallic fibers with an even number of the yarns in a range of four up to eight and forming no or only a small inner hollow.

2. A fiber-reinforced rubber according to claim 1, wherein said braided yarns (6) are comprised of long and/or short fiber spun yarns.

3. A fiber-reinforced rubber according to claim 1 or claim 2, wherein said braided yarns (6) of organic fibers are comprised of aramid fibers.

4. A fiber-reinforced rubber according to any of the claims 1 to 3, wherein said hollow of each cylindrically braided cord (7) houses a center cord.

5. A fiber-reinforced rubber according to any of the claims 1 to 4 and forming a power transmission belt (A) having a belt base that comprises a stretching rubber layer (1) and a plurality of teeth (3) which are formed on one side thereof, whereby a plurality of said cylindrically braided cords (7) is embedded in said stretching rubber layer (1).

6. A fiber-reinforced rubber according to any of the claims 1 to 4 and forming a conveyor belt, a tire or a hose.

## Patentansprüche

1. Faserverstärkter Gummi (1, 3) mit einer Faserverstärkung (2) aus zylindrisch geflochtenen Schnüren (7), die darin eingebettet sind,
dadurch gekennzeichnet, daß die zylindrisch geflochtenen Schnüre (7) jeweils aus geflochteten Garnen (6) von anorganischen, organischen oder metallischen Fasern mit einer geraden Anzahl Garnen in einem Bereich von vier bis zu acht bestehen und keinen oder nur einen kleinen inneren Hohlraum ausbilden.

2. Faserverstärkter Gummi nach Anspruch 1, bei welchem die geflochtenen Garne (6) aus langen und/oder kurzen fasergesponnenen Garnen bestehen.

3. Faserverstärkter Gummi nach Anspruch 1 oder Anspruch 2, bei welchem die geflochtenen Garne (6) aus organischen Fasern aus Aramid-Fasern bestehen.

4. Faserverstärkter Gummi nach einem der Ansprüche 1 bis 3, bei welchem der Hohlraum jeder zylindrisch geflochtenen Schnur (7) eine Zentralschnur aufnimmt.

5. Faserverstärkter Gummi nach einem der Ansprüche 1 bis 4 und in der Ausbildung eines Treibriemens (A) mit einer Riemenbasis, welche eine Streckgummilage (1) und eine Vielzahl von Zähnen (3) aufweist, die an einer Seite davon ausgebildet sind, wobei eine Vielzahl der zylindrisch geflochtenen Schnüre (7) in die Streckgummilage (1) eingebettet ist.

6. Faserverstärkter Gummi nach einem der Ansprüche 1 bis 4 und in der Ausbildung eines Förderbandes, eines Reifens oder eines Schlauches.

## Revendications

1. Caoutchouc renforcé par fibres (1, 3) à renforcement fibreux (2) en tresses tressées sous forme cylindrique (7), qui se trouvent y noyées,
**caractérisé** en ce que chacune desdites tresses tressées sous forme cylindrique (7) consiste en fils tressés (6) faits des fibres inorganiques, organiques ou métalliques, à nombre pair de fils dans une rangée de quatre à huit fils, qui ne forment pas un creux intérieur ou ne forment qu'un petit creux intérieur.

2. Caoutchouc renforcé par fibres selon la revendication 1, dans lequel lesdits fils tressés (6) consistent en longues et/ou courts fils en fibres filées.

3. Caoutchouc renforcé par fibres selon la revendication 1 ou 2, dans lequel lesdits fils tressés (6) en fibres organiques consistent en fibres en aramide.

4. Caoutchouc renforcé par fibres selon une quelconque des revendications 1 à 3, dans lequel ledit creux de chaque tresse tressée sous forme cylindrique (7) reçoit une corde centrale.

5. Caoutchouc renforcé par fibres selon une quelconque des revendications 1 à 4, qui constitue une courroie de transmission (A) à une base de courroie qui comprend une couche en caoutchouc d'allongement (1) et une pluralité de dents (3) formées sur un côté de cette couche, à une pluralité desdites tresses tressées sous forme cylindrique (7) qui se trouvent noyées dans ladite couche en caoutchouc d'allongement (1).

6. Caoutchouc renforcé par fibres selon une quelconque des revendications 1 à 4, qui constitue une courroie de transport, un pneumatique ou un tuyau souple.
